Europäisches Patentamt

European Patent Office

Office européen des brevets

(11) Numéro de publication : **0 674 115 A1**

# (12) DEMANDE DE BREVET EUROPEEN

(21) Numéro de dépôt : **95400637.5**

(22) Date de dépôt : **22.03.95**

(51) Int. Cl.⁶ : **F16D 65/12**

(30) Priorité : **25.03.94 FR 9403536**

(43) Date de publication de la demande :
**27.09.95 Bulletin 95/39**

(84) Etats contractants désignés :
**CH DE ES FR GB IT LI SE**

(71) Demandeur : **GEC ALSTHOM TRANSPORT SA**
**38, Avenue Kleber**
**F-75016 Paris (FR)**

(72) Inventeur : **Watremez, Michel**
**10/1, Avenue des Lilas**
**59770 Marly (FR)**

(74) Mandataire : **Fournier, Michel et al**
**SOSPI**
**14-16, rue de la Baume**
**F-75008 Paris (FR)**

(54) **Disque multimatériaux pour freinage à haute énergie constitué de l'assemblage de différents flasques.**

(57) La présente invention porte sur un disque multimatériaux (40, 50, 60, 800) pour freinage à haute énergie constitué de différents flasques assemblés, à savoir, successivement, un flasque central (41, 51, 61, 801) et, disposés de part et d'autre dudit flasque central, des barrières thermiques (42, 52, 62, 802), de flasques externes (43, 53, 63, 803) composés d'un substrat (44, 54, 64, 804) revêtu sur une de ses faces d'un revêtement (45, 55, 65, 805) du type céramique ou cermet.

FIG.8

La présente invention concerne les matériaux de friction ainsi que leur utilisation dans les dispositifs de freinage et porte, plus particulièrement, sur un disque multimatériaux pour freinage à haute énergie.

L'optimisation des matériaux de friction constitutifs des systèmes de freinage des trains à grande vitesse s'avère de plus en plus délicate en raison des niveaux d'énergie gigantesques à dissiper. Dans ce contexte particulièrement évolutif, les solutions traditionnelles comme les disques de freinage type trains à grande vitesse atlantique (TGV-A) en conjugaison avec les garnitures en métal fritté fer-cuivre par exemple, atteignent leurs limites et la limitation de la vitesse d'exploitation à 300 km/h pour le transport des passagers provient, en partie, de l'incapacité actuelle à concevoir des systèmes de freinage suffisamment performants. A très haute vitesse, les freins à friction restent seuls capables d'assurer l'arrêt de la rame.

Les dispositifs de freinage de l'état de la technique font appel, par exemple, à un dispositif à pinces nécessitant l'utilisation de disques de freinage généralement montés sur l'essieu.

Dans ces dispositifs, des plaquettes de frein viennent mordre les disques de freinage de part et d'autre du disque lui-même.

L'optimisation des matériaux de friction constituant certaines parties des dispositifs de freinage des trains à grande vitesse ou des véhicules roulants de masse importante est de plus en plus délicate, en raison des niveaux d'énergie gigantesques à dissiper. Ces énergies sont fonction du carré de la vitesse et de la masse en mouvement.

L'énergie à dissiper est également importante lorsque la fréquence du freinage est élevée, ce qui est le cas des métros.

Les dispositifs de freinage de l'art antérieur mettant en oeuvre, par exemple, des disques de freinage pour TGV-A et des garnitures en métal fritté fer-cuivre atteignent maintenant leurs limites.

A titre d'exemple, les dispositifs de freinage de l'art antérieur montés sur train à grande vitesse, dissipent une énergie de l'ordre de 14 MJ sur chaque disque lorsqu'un freinage est effectué à partir d'une vitesse de l'ordre de 300 km/h. L'énergie maximale pouvant être dissipée est de l'ordre de 19 MJ.

Les objectifs actuels dans le domaine du freinage sont de dissiper une énergie de l'ordre de 25 MJ sur chaque disque lorsqu'un freinage est effectué à partir d'une vitesse de l'ordre de 400 km/h.

Les freins céramiques constituent une alternative intéressante. Les matériaux céramiques possèdent, généralement, des chaleurs spécifiques et des résistances mécaniques élevées à haute température, de bonnes caractéristiques de frottement, et pour certains une bonne résistance aux chocs thermiques. Les céramiques massives sont toutefois très fragiles et ne permettent pas d'envisager une solution fiable via un disque de freinage monobloc. Par contre, l'option revêtement ou insert céramique semble plus réaliste du point de vue fiabilité mais aussi des coûts. Ainsi, des applications multimatériaux, telles des revêtements céramiques élaborés sur disque par projection thermique ou des disques composés de différents flasques assemblés ainsi que des garnitures en céramique frittée, peuvent être envisagées. Cette technologie, initialement développée dans le domaine ferroviaire (TGV, rames ferroviaires à arrêts fréquents...), peut être développée pour d'autres types de véhicule (poids lourds...) susceptible d'engendrer des énergies importantes à dissiper en configuration de freinage ou encore pour toute autre application de freinage où un coefficient de frottement stable et des usures faibles des matériaux de friction seraient appréciés.

Lors d'un freinage par friction se pose le problème d'évacuation de la chaleur. Il faut en effet que la chaleur, engendrée par le freinage à proximité des moyeux de roue, ne se communique aux roulements des roues sensibles à la chaleur. Un dégagement trop intense risque de provoquer le blocage de la roue sur son essieu. Les revêtements ou les inserts céramiques ou cermets (céramique-métal) ont pour objet de limiter la propagation de chaleur dans l'essieu, d'améliorer la résistance à l'usure du couple disque/garniture et sa tenue à la fatigue thermique tout en présentant des caractéristiques de frottement stables à température élevée, ce qui a conduit au développement d'un nouveau type de garniture.

Aussi un but de la présente invention est-il de proposer un disque multimatériaux pour freinage à haute énergie pour trains à grande vitesse utilisant des matériaux céramiques. Les variantes de l'invention portent uniquement sur le disque qui agit dans tous les cas en conjugaison avec une garniture céramique tel que décrit dans l'état de la technique.

Un autre but de la présente invention est-il de proposer des matériaux de friction susceptibles d'être utilisés dans un disque de freinage et permettant de limiter la propagation de chaleur dans l'essieu.

Un autre but de la présente invention est de proposer des matériaux de friction susceptibles d'être utilisés dans un disque de freinage et permettant d'améliorer la résistance à l'usure du couple disque/garniture.

Un autre but de la présente invention est de proposer des matériaux de friction susceptibles d'être utilisés dans un disque de freinage et permettant d'améliorer la tenue du disque à la fatigue thermique tout en présentant des caractéristiques de frottement stables à température élevée.

Dans le présent texte, le terme cermet est l'abréviation de céramique/métal et désigne un matériau composite céramique-métal.

L'invention a pour objet un disque multimatériaux pour freinage à haute énergie caractérisé en ce qu'il est constitué de différents flasques assemblés.

Conformément à l'invention, le disque multimatériaux satisfait à l'une des caractéristiques suivantes:

- il est composé, successivement, d'un flasque central de barrières thermiques, disposés de part et d'autre dudit flasque central, et de flasques externes composés d'un substrat comportant un revêtement sur une de ses faces;
- le flasque central est en alliage d'aluminium ou en composite à matrice d'aluminium et/ou les barrières thermiques sont en matériau céramique fritté sous forme massive en zircone ou en matériau céramique thermiquement isolant et/ou les substrats sont en acier et/ou l'ensemble est constitué d'une sous-couche et/ou d'un matériau composite céramique-métal du type nickel-chrome/carbure de chrome;
- les barrières thermiques sont élaborées à partir de matériaux composites constitués d'un mélange de fibres d'alumine ou de céramique oxyde et de liant organique;
- le flasque central comporte des barrières thermiques réalisées sur ses faces par un procédé de dépôt;
- les flasques externes comportent des secondes barrières thermiques réalisées sur une de leurs faces par un procédé de dépôt.

Les disques multimatériaux pour freinage à haute énergie conformes à l'invention sont de préférence associés à une garniture de frein comportant des plots en titanate d'aluminium ou en un autre matériau céramique.

Conformément à l'invention, les plots de la garniture de frein se composent principalement de l'ordre de 54% d'alumine, de l'ordre de 33% d'oxyde de titane, de l'ordre de 3% de silice et de l'ordre de 2,5% d'oxyde de magnésium.

Des simulations de freinage à haute énergie sur des disques réduits ont montré que l'association d'une garniture en titanate d'aluminium et d'un disque revêtu de cermet nickel-chrome/carbure de chrome constitue un couple de matériaux qui, en configuration de freinage, présente des performances intéressantes tant du point de vue coefficient de frottement que de l'usure. De même, il a été montré que l'insertion d'une barrière thermique conduit à des gains de températures appréciables dans l'épaisseur du disque.

D'autres buts, caractéristiques et avantages de l'invention apparaîtront à la lecture de la description des modes de réalisation préférés du disque multimatériaux à haute énergie, description faite en liaison avec les dessins joints dans lesquels:

- la figure 1 représente le dispositif de projection pour la réalisation du disque multimatériaux projeté conformément à l'invention;
- la figure 2 représente une vue partielle en coupe transversale d'un disque multimatériaux composé d'un substrat et d'un revêtement de type triplex projeté conforme à l'invention;
- la figure 3 illustre une possibilité de fixation des plots céramiques des garnitures;
- la figure 4 représente une vue partielle en coupe transversale d'un disque multimatériaux rapporté conforme à l'invention;
- la figure 5 représente une vue partielle en coupe transversale d'une variante du disque multimatériaux rapporté conforme à l'invention;
- la figure 6 représente une vue partielle en coupe transversale du disque multimatériaux rapporté de la figure 5 comportant une barrière thermique supplémentaire;
- les figures 7 et 8 représentent une vue de face et en coupe transversale selon VIII-VIII d'un disque de friction constitué de flasques rapportés conforme à l'invention;
- la figure 9 représente le détail IX de la figure 8.

Une première réalisation conforme à l'invention prend en compte exclusivement l'aspect "revêtement" et porte sur un disque projeté, c'est à dire comportant des revêtements élaborés par projection thermique.

Parmi les différentes techniques d'élaboration de dépôts, la projection plasma atmosphérique a été retenue vues la nature des matériaux à projeter et les épaisseurs de couches souhaitées tout en tenant compte de l'aspect économique du procédé de mise en oeuvre. La projection thermique plasma consiste à introduire des particules solides dans un jet de plasma afin de les fondre avant qu'elles ne viennent s'écraser sur le substrat où elles forment un dépôt ayant une structure lamellaire.

L'adaptation d'un revêtement sur un disque n'est pas chose aisée dans la mesure où il doit présenter une parfaite adhérence au substrat pour satisfaire correctement à ses fonctions. Les principales difficultés sont dues à la nature des liaisons chimiques entre la céramique et le substrat, à la fragilité intrinsèque des céramiques ainsi qu'aux différences de module de Young et de coefficient de dilatation entre le dépôt projeté et le substrat. Durant la projection, les particules liquides ou semi-liquides viennent s'étaler sur le substrat. Il y a pénétration des particules liquides projetées dans les irrégularités de surface du matériau de base ou des particules précédentes, transfert de chaleur vers le substrat, refroidissement et solidification très rapide par contraction des particules.

Dans le cas de revêtements réalisés par projection plasma, l'adhésion et la cohésion du dépôt sont essentiellement d'origine mécaniques et la préparation du substrat est une des phases principales dont dépend l'accrochage d'un dépôt. Pour notre application, un sablage du disque avant projection au corindon de grade 16 (oxyde d'alumine, diamètre moyen des grains: 1 mm, pression de sablage: 6bar, Ra=6 μm) permet d'obtenir la rugosité adéquate.

Des rugosités plus importantes et des modifications de surfaces peuvent également être obtenues par rainurage, par électroérosion, par procédé laser ou encore par des décapages chimiques, ces traitements devant s'effectuer quelques minutes avant la projection afin de limiter les risques d'oxydation.

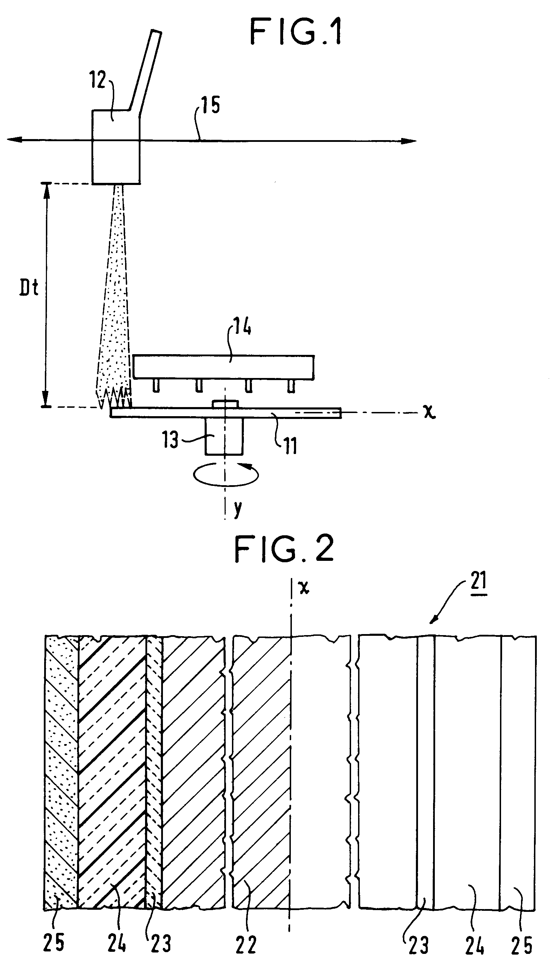

Le dispositif de projection utilisé pour le développement est reproduit sur la figure 1. Le disque multimatériaux 11 est entraîné en rotation autour de son axe de révolution Y par des moyens de rotation 13, à vitesse constante, alors qu'une torche 12, placée à la distance Dt du disque, se déplace selon un mouvement de "va et vient" parallèle à l'axe x, symbolisé par une double flèche 15, avec une vitesse de translation asservie au rayon du disque 11 de façon à obtenir une épaisseur de revêtement constante. Il est impératif de maîtriser les paramètres de projection et le refroidissement du disque 11, par des moyens de refroidissement 14, durant la phase de projection afin de minimiser les contraintes résiduelles.

Afin de répondre aux fonctions précédemment citées, un revêtement 21 de type triplex a été retenu. Une couche de liaison 23 en NiCrAlY, une couche composite "zircone yttriée-NiCrAlY" jouant le rôle de barrière thermique 24 et enfin une couche de frottement 25 en cermet à base de carbure de chrome sont ainsi déposées sur un substrat 22.

Une telle structure d'un disque multimatériaux (21) avec un revêtement de type triplex est par exemple représentée à la figure 2.

La structure proposée figure 2 est relative à un substrat 22 en acier et les compositions des poudres projetées dans ce cas sont présentées dans le tableau 1.

| fonction | matériau | composition en poids | taille des particules |
|---|---|---|---|
| accrochage -liaison | NiCrAlY | nickel: 70%<br>chrome: 20%<br>aluminium: 9%<br>yttrium: 0,27% | 45 à 125 μm |
| barrière thermique | composite NiCrAlY- zircone yttriée (proportions:25/75 en volume) | NiCrAlY: idem<br>zircone yttriée:<br>    zircone: 85%<br>    yttrium:  8% | 45 à 70 μm |
| frottement -usure | cermet Nickel/chrome - carbure de chrome | carbure de chrome:  75%<br>nickel-chrome:  25%<br>dont: nickel: 80%<br>        chrome:  20% | 10 à 90 μm |

Il est envisageable de réaliser le revêtement sur des substrats 22 en acier ou en fonte de tous types.

Pour une application de freinage haute énergie, l'utilisation d'alliages d'aluminium comme substrat 22 n'est pas envisageable en raison de leur température limite d'utilisation à partir de laquelle leurs caractéristiques mécaniques sont fortement diminuées. Par contre, si l'application visée est relative à des freinages engendrant de plus faibles énergies et où l'on recherche dans cette technique l'aspect tribologique (coefficient de frottement et usure), il est tout à fait possible de réaliser la projection du cermet nickel-chrome/carbure de chrome avec l'insertion d'une barrière thermique ou non sur des alliages d'aluminium. Il est alors nécessaire de réaliser une sous-couche d'accrochage 23 graduée permettant d'atténuer les différences des coefficients de dilatation. Le second mode de réalisation présenté plus loin permet de valoriser la légèreté des alliages d'aluminium et de diminuer ainsi considérablement le poids des essieux.

On notera que pour une application de freinage à haute énergie, il est envisageable d'utiliser des composites à matrice d'aluminium renforcée par des fibres (carbures ou oxydes) comme substrats 22; ces matériaux conservant leurs caractéristiques mécaniques à des températures plus élevées.

La sous-couche d'accrochage 23 n'est pas indispensable mais permet d'accroître l'adhérence avec le substrat 22 et avec le dépôt supérieur 24. Sans sous-couche d'accrochage 23, l'adhérence est essentiellement mécanique alors qu'avec une sous-couche d'accrochage 23, une petite zone de diffusion peut être observée. Les alliages d'accrochage sont des matériaux qui présentent des résistances accrues à l'oxydation et à la corrosion ce qui permet de limiter l'oxydation à chaud susceptible de se développer vu l'échauffement en situation de freinage. Cette couche de liaison permet également de minimiser les différences de coefficient de dilatation entre le substrat 22 et la seconde couche projetée, à savoir la barrière thermique 24. D'autres alliages comme par exemple l'aluminium de nickel peuvent être utilisés comme couche de liaison mais constituent une barrière à l'oxydation plus pauvre comparé à un alliage de type MCrAlY (où M: nickel ou cobalt), plus communément utilisé comme sous-couche.

Les dépôts à base de zircone sont les plus couramment utilisés, en industrie, comme barrière thermique, vue leur faible conductivité thermique et leur coefficient de dilatation thermique relativement élevé. Cependant, des essais en configuration de freinage ont mis en évidence la fiabilité supérieure des revêtements composites qui présentent une bien meilleure adhérence sur les substrats et une cohésion plus forte. Il s'agit de composites "métal-céramique" du type NiCrAlY-zircone présentant des caractéristiques mécaniques nettement supérieures à celle de la zircone tout en offrant une moindre sensibilité aux chocs thermiques et une "efficacité barrière thermique" quasiment identique mais l'utilisation d'une zircone yttriée pure ou de tout autre céramique oxyde isolante (titanate d'aluminium, alumine...) est possible. Une augmentation d'épaisseur du dépôt conduit à une diminution de sa résistance à la fatigue thermique, ce qui conduit à chercher le meilleur compromis isolation thermique/résistance suivant la configuration de freinage rencontrée. Cette remarque est également valable pour la couche de frottement 25 dont l'épaisseur sera optimisée en fonction des contraintes essentiellement thermiques engendrées par l'application de freinage visé. La taille des particules indiquée dans le tableau 1 n'est qu'indicative. Suivant le cas d'application, l'utilisation de poudres de granulométrie plus faible ou plus grossière peut être d'un intérêt particulier. L'utilisation de particules de large diamètre conduit notamment à une diminution du taux de contraintes résiduelles et à un degré de porosité plus élevé. On notera qu'un degré de porosité élevé est favorable pour la résistance aux chocs thermiques mais facilite la pénétration d'éléments corrosifs, conduisant à la corrosion et à l'oxydation du substrat sous l'effet de cycles thermiques et qu'il s'agit donc ici encore de trouver le meilleur compromis suivant l'application visée.

En ce qui concerne la mise en oeuvre des revêtements, outre la torche plasma sous forme atmosphérique ou autres (plasma basse pression, plasma en atmosphère et températures contrôlées), il est possible d'utiliser d'autres techniques de projection thermique à flamme (notamment les pistolets super et hypersonique) ou encore des procédés lasers. On peut également envisager de réaliser les différentes couches en combinant les différentes technologies de dépôts; la projection hypersonique permet d'obtenir des dépôts plus denses comparé au plasma et peut être avantageux pour la couche de frottement ainsi moins sensible à l'usure, alors que la réalisation de la couche barrière thermique est difficilement envisageable avec ce procédé de mise en oeuvre; paradoxalement, les meilleurs résultats, au niveau de l'adhérence, sont obtenus en réalisant les différentes couches de manière continue et graduelle (nécessité de disposer de plusieurs distributeurs de poudres) afin de limiter l'oxydation entre les couches et d'atténuer les différences de caractéristiques entre les matériaux projetés. De ce point de vue, il semble préférable de s'orienter vers des traitements post-projection plutôt que d'avoir recours à une combinaison de procédés.

Un certain nombre de traitement post-projection peuvent s'avérer nécessaires pour améliorer la durée de vie de tels dispositifs notamment dans le cas de freinage engendrant des énergies extrêmement élevées. L'utilisation d'un traitement à chaud dans un environnement inerte (traitement de diffusion) pour relâcher les contraintes résiduelles permet d'accroître l'adhérence par création d'une zone de diffusion à l'interface sous-couche/substrat ainsi qu'aux différentes interfaces dans le cas de revêtements multicouches. Un traitement de surface au laser peut être effectué pour refusionner un revêtement ayant préalablement été déposé. On notera également que la refusion peut être réalisée en introduisant au sein du dépôt densifié d'autres particules de nature différente, permettant alors d'obtenir en surface d'autres caractéristiques (coefficient de frottement plus ou moins élevé par exemple). Ce traitement change la microstructure des dépôts pour les rendre plus denses et permet d'obtenir un état de contraintes résiduelles plus faible. La refusion superficielle par laser permet d'obtenir en surface un revêtement dense, lisse, à microstructure fine et homogène et présentant de meilleurs propriétés thermomécaniques. Sous cette couche d'environ 100 à 200 μm d'épaisseur, le dépôt reste tel qu'il est obtenu après projection plasma. Le résultat de ce traitement, par rapport aux dépôts "brut plasma" est une augmentation de la résistance à l'usure et une meilleure tenue aux chocs thermiques.

On notera qu'il est possible de renforcer les dépôts lors de leur élaboration par des fibres (carbures ou oxydes) afin d'améliorer notamment leur résistance aux chocs thermiques.

En vue d'une application sur des trains à grande vitesse, des simulations de freinage sur des disques réduits en acier 28CDV5-0,8 ont été mené en conjugaison avec des garnitures en fritté fer-cuivre de type Jurid 721, matériaux utilisés pour le matériel TGV-A, à titre de référence. Les mêmes essais menés sur des disques revêtus (sous-couche de 0,1 mm+barrière thermique de 0,5 mm+couche de frottement de 0,5 mm) conduisent à un coefficient de frottement très instable. L'insertion de la barrière thermique engendre logiquement une diminution des températures au sein des disques mais aussi une augmentation des températures dans les garnitures qui présentent alors une usure très sévère. Ainsi, l'optimisation d'un disque de freinage ne peut être dissociée de celle de la garniture. En accroissant le transfert thermique vers la garniture, les disques de freinage à barrière thermique nécessitent la mise au point d'une nouvelle génération de garniture. Les céramiques présentent des caractéristiques thermomécaniques stables à température élevée et l'utilisation de garnitures en titanate d'aluminium associées à des disques revêtus en surface de cermet nickel-chrome/carbure de chrome, permet d'obtenir un coefficient de frottement remarquablement stable dans le temps, quelle que soit la vitesse ou la puissance considérée et de répartir plus équitablement la chaleur engendrée à l'interface.

En considérant l'application sur trains à grande vitesse équipés de garnitures constituées de plots cylindriques en métal fritté-cuivre, des plots en titanate d'aluminium ont été réalisés par pressage isostatique. A titre indicatif, les plots se composent principalement de 54% d'alumine, de 33% d'oxyde de titane, de 3% de silice et de 2,5% d'oxyde de magnésium. Cette composition chimique peut être modifiée pour ajuster le comportement tribologique. Comparés aux plots en métal fritté, les plots en céramique sont plus légers et leur fabrication nettement moins onéreuse.

Parallèlement, ces matériaux de friction conduisent, en configuration de freinage, à des usures plus faibles et plus régulières comparées au couple "28CDV5/garniture frittée Fe-Cu" actuellement utilisé. Dans le cas des céramiques, le mécanisme d'usure par émission de débris est souvent suivi d'un phénomène de glaçage à haute température consistant en la formation d'une couche superficielle très dure, d'épaisseur de l'ordre du micron. D'un point de vue pratique, le glaçage confère au couple "cermet nickel-chrome/carbure de chrome/titanate d'aluminium" une bonne résistance à l'usure et un coefficient de frottement stable.

Du fait de la très faible conductivité thermique du titanate d'aluminium, l'utilisation d'une telle garniture conduit logiquement, à puissance égale, à une augmentation de la température de surface du disque. L'adjonction d'une barrière thermique entre le substrat et la couche de frottement conduit à des températures de surface encore un peu plus élevées mais l'efficacité de la barrière thermique permet d'obtenir des températures plus faibles au sein du substrat. Suivant le cas d'application, il convient d'optimiser l'épaisseur de la barrière thermique afin d'obtenir une répartition satisfaisante de la chaleur dû au freinage entre le disque et les garnitures. On notera que l'augmentation des températures de surface dans ce cas est également dû au fait que la couche barrière thermique soit très proche de la surface de frottement. Le second mode de réalisation présenté plus loin permet justement de pallier ce handicap.

En dehors du titanate d'aluminium, d'autres matériaux céramiques élaborés par pressage isostatique ou autres (pressage uni axial, coulage, extrusion ou moulage par injection) peuvent convenir, après expérimentations de leurs caractéristiques tribologiques en configuration de freinage.

Quel que soit le disque à friction considéré (TGV ou autre) la réalisation de revêtements n'engendre pas de modifications de conception puisque cette technologie consiste simplement à déposer d'autres matériaux en surface.

Les plots actuels des garnitures TGA-A sont frittés dans des grillages, puis soudés sur une embase métallique, elle même soudée sur la tôle support. Dans le cas de plots céramiques, il n'est plus possible d'utiliser directement les moyens de soudures pour leur fixation.

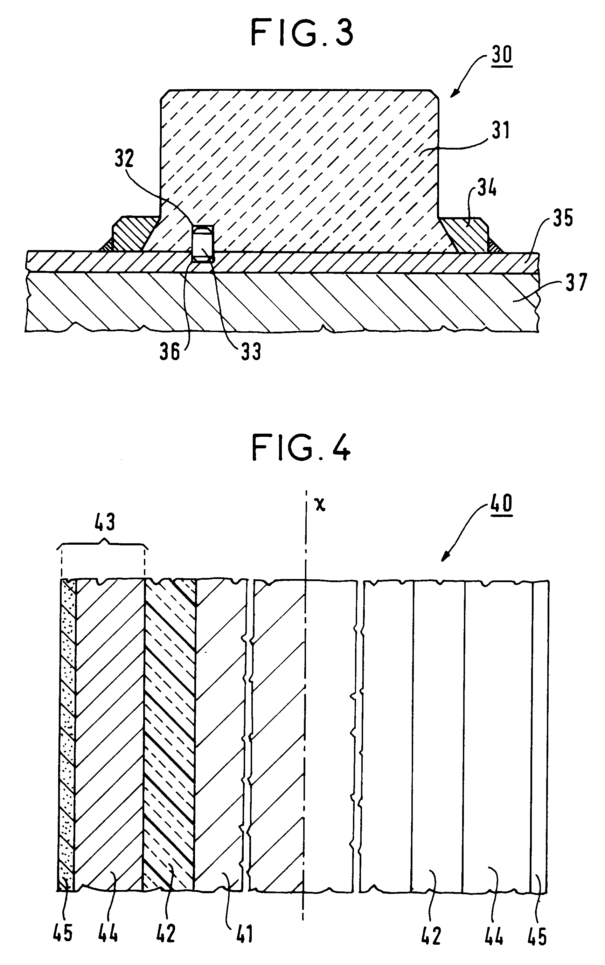

La figure 3 illustre une possibilité de fixation des plots 31 d'une garniture 30. Après frittage, un plot 31 est usiné de manière classique afin d'obtenir une embase conique. Un pied de centrage 33, placé dans des logements 32 et 36, permet d'immobiliser le plot en rotation. Une bague 34, en acier inoxydable par exemple, présente intérieurement un plan conique. Cette bague 34 est rapportée sur le plot 31 puis soudée sur une tôle support 35 solidaire d'une queue d'arronde 37 s'adaptant sur le dispositif d'application (non représenté) des garnitures et permet la fixation du plot 31.

En dehors de l'apport technique ci-dessus décrit, l'intérêt économique de cette technologie est appréciable. Quel que soit le matériel ferroviaire ou autre considéré, les disques de freinage actuels ont un coût relativement élevé. A titre d'exemple, les disques types TGV-A sont en acier 28 CDV 5-0,8, nuance d'acier allié à haute limite élastique et sont traités pour une dureté sur piste de 370 HB, ce qui engendre des coûts conséquents.

L'intérêt économique du procédé réside dans le fait que l'on utilise d'une part des matériaux chers simplement là où ils sont nécessaires et dans la masse, un acier aux caractéristiques moyennes; d'autre part les disques revêtus peuvent être recyclés après usure en supprimant les dépôts dégradés à l'aide d'outils spéciaux (outils revêtus par exemple) et en projetant de nouveaux matériaux sur le disque ainsi récupéré. On notera qu'il est difficilement envisageable de ne retirer que la couche de frottement et qu'il est plus fiable de réaliser le revêtement total de nouveau.

Un second mode de réalisation conforme à l'invention porte sur un disque rapporté qui, comme indiqué précédemment, permet de combiner et même d'améliorer au niveau du transfert thermique les intérêts techniques du premier mode de réalisation et de réduire considérablement le poids des disques de friction. Cette conception devrait induire des gains de poids de l'ordre de 40% par disque comparé à un disque acier monobloc.

Ce second mode de réalisation consiste à concevoir un disque constitué de différents flasques assemblés. Pour utiliser des alliages d'aluminium en freinage, il faut nécessairement rester à des températures raisonnables pour préserver leurs caractéristiques mécaniques même s'il s'agit de composites à matrice d'aluminium renforcée par des fibres.

Comme indiqué, figure 4, le disque multimatériaux (40) se compose de quatre parties.

Un flasque central 41 est directement relié à l'essieu. Des flasques intermédiaires 42 agissent comme barrière thermique et permettent, en réalisant une chute importante de température, d'utiliser un disque central 41 en alliage d'aluminium. Ces flasques isolants 42 sont en zircone frittée et donc sous forme massive.

D'autres matériaux céramiques similaires (alumine, titanate) élaborés par voie classique (pressage uni axial ou isostatique, coulage, moulage par injection voire même par extrusion) pourraient eux aussi convenir. On peut également utiliser des matériaux composites constitués d'un mélange de fibres souvent d'alumine, et de liant organique, qui comme les céramiques massives élaborées par voie classique s'usinent sans difficultés et présentent, comparés à ces dernières, des conductivités thermiques nettement plus faibles tout en offrant une résistance aux chocs thermiques et des propriétés thermomécaniques équivalentes.

Des flasques externes 43 se composent d'un substrat 44 en acier revêtu, sur une de ses faces, d'un cermet nickel-chrome/carbure de chrome 45 déposé éventuellement sur une sous-couche. Agissant en combinaison avec des garnitures (non représentées) en titanate d'aluminium, ces flasques externes 43 permettent de bénéficier des avantages tribologiques (stabilité du coefficient de frottement, usure faible et régulière, possibilité d'ajuster la valeur du coefficient de frottement) décrits dans le premier mode de réalisation.

Le fait de disposer la barrière thermique plus loin de l'interface permet, comparé au premier mode de réalisation, de limiter l'augmentation des températures des surfaces de frottement et donc l'usure des matériaux antagonistes. Les épaisseurs des flasques intermédiaires 42, et des flasques externes 43, non revêtues sont à optimiser suivant l'application de freinage visée; l'objectif étant d'obtenir une chute de température suffisamment importante au niveau des interfaces 42/41 pour permettre l'utilisation d'alliage d'aluminium tout en ayant une température minimale au niveau des surfaces frottantes.

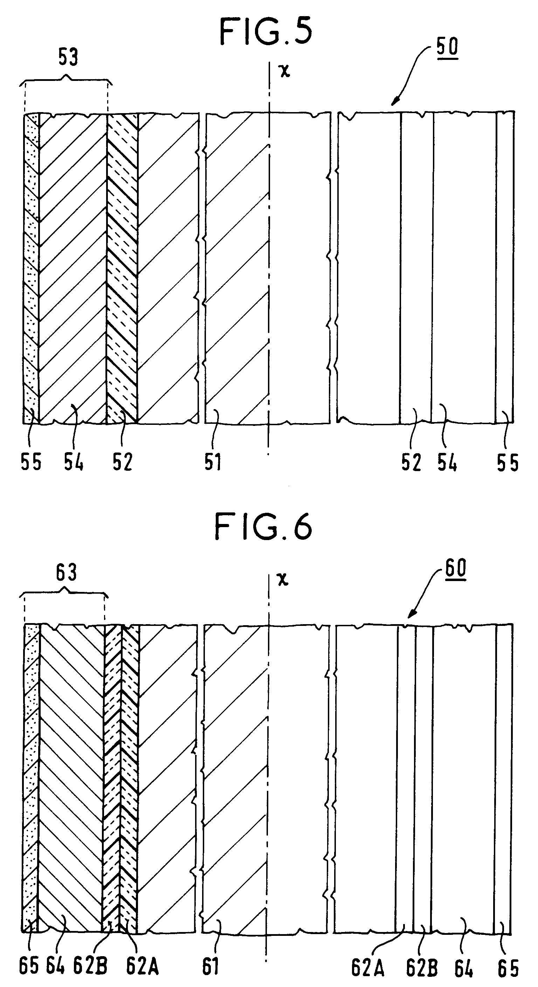

Une variante permettant d'utiliser deux types de flasques peut être envisagée en réalisant une barrière thermique 52 sur un flasque central 51 en alliage d'aluminium par un procédé de dépôt. Comme décrit précédemment, on retrouve un flasque externe (53) composé d'un substrat (54) comportant un revêtement (55) sur une de ses faces. Un tel disque multimatériaux (50) est représenté à la figure 5.

Comme indiqué dans le premier mode de réalisation, l'épaisseur de la barrière thermique est limitée. Dans le cas d'une application de freinage à très haute énergie, l'épaisseur de la barrière thermique ainsi réalisée peut être insuffisante et on peut alors envisager, à partir de la réalisation d'une première barrière thermique 62A sur un flasque central 61, de réaliser une seconde barrière thermique 62B sur un flasque externe 63. Une réalisation d'un tel disque multimatériaux (60) est représentée à la figure 6.

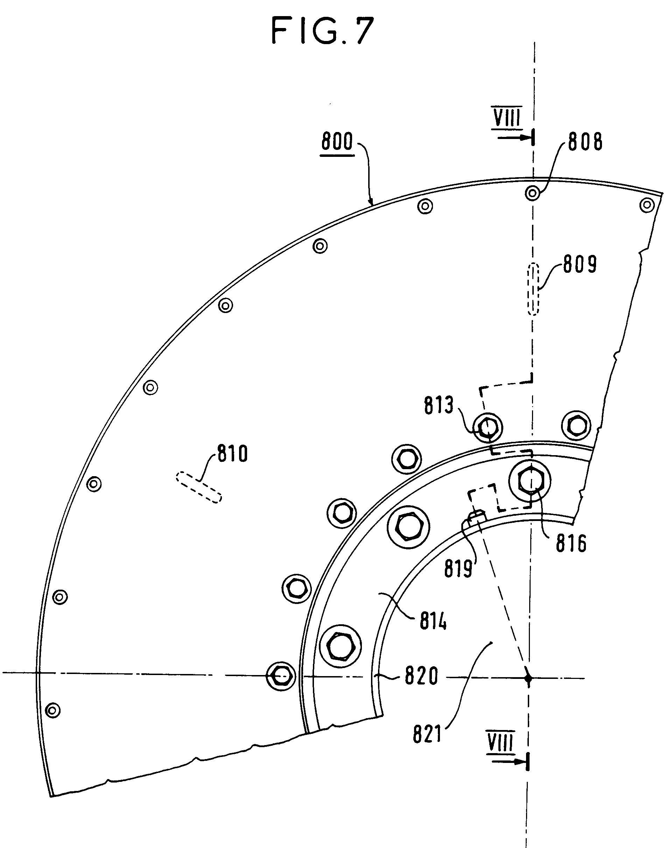

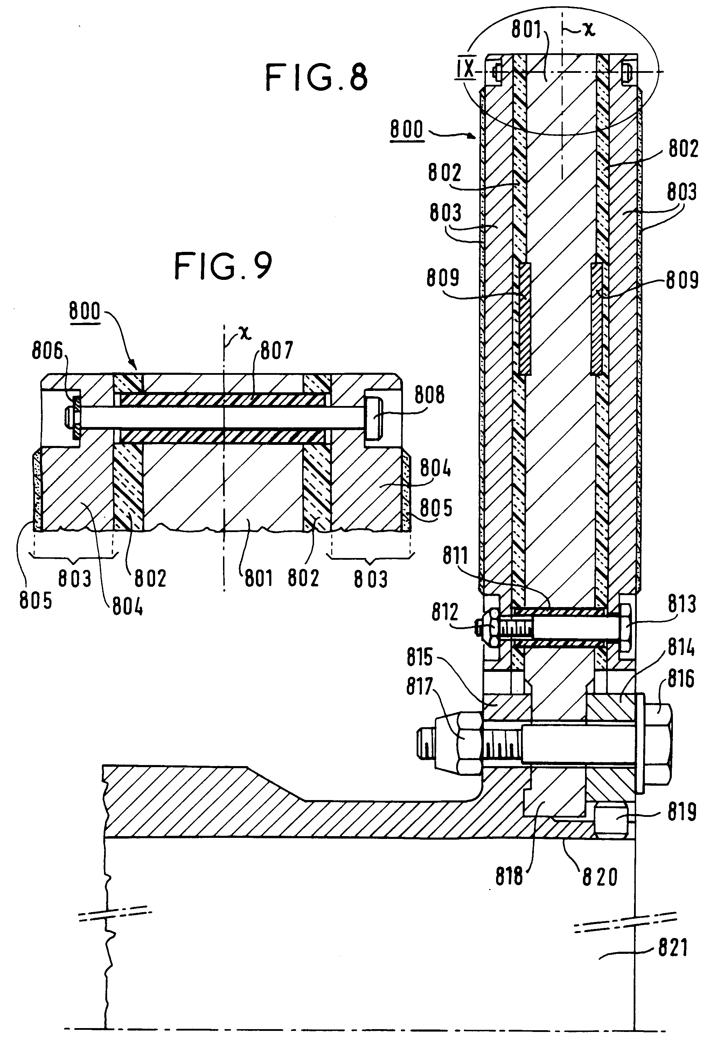

Comparé au premier mode de réalisation, les disques de friction constitués de flasques rapportés nécessitent une conception particulière. A titre d'exemple, la description portera sur un disque 800 de friction monté sur un essieu 821 de bogie porteur type TGV-Atlantique (Fig.7 et 8).

Les flasques intermédiaires 802 et externes 803 sont rapportés sur le flasque central 801 avant que ce dernier ne soit fixé sur un essieu 821 par l'intermédiaire d'un moyeu 820. Les flasques 802, 803 en vis-à-vis sont maintenus entre eux par des vis 813, des écrous 812 auto-freinés à leur base et, par exemple, par un système d'axes clipsés 806 et 808 à leur périphérie externe. Ces flasques sont entraînés en rotation avec le flasque central 801 par l'intermédiaire de clavettes 809 et 810 insérées entre les flasques dans des logements.

Le moyeu 820 est fritté sur l'essieu 821 et permet de recevoir le disque de friction 800 constitué des différents flasques 801-803 assemblés.

Le flasque central 801 en alliage d'aluminium est rapporté sur le moyeu 820 par un assemblage à talon 818. Ce talon 818 s'engage sous la butée axiale 815 du moyeu 820. Un pied de centrage 819 est placé dans un logement prévu dans le moyeu et sert à immobiliser en rotation la bague 814. La fixation du flasque central 801 en alliage d'aluminium sur lequel sont rapportés les autres flasques 802, 803 est assuré par les vis 816 et les écrous auto-freinés 817. Les fourreaux céramiques 807 et 811 permettent d'isoler les flasques externes 803 de frottement du flasque central 801 en alliage d'aluminium.

Comme décrit précédemment, le flasque externe 803 se compose d'un substrat 804 et d'un revêtement 805.

La réalisation d'un disque rapporté est plus onéreuse que celle d'un disque monobloc revêtu mais, outre le gain de poids qui engendre d'autres gains à de nombreux autres niveaux (bruits, vibrations...), permet d'obtenir des performances thermomécaniques et tribologiques (frottement et usure) supérieures à la conception disque monobloc revêtu, ce qui peut être particulièrement avantageux pour des freinages à très haute énergie.

Comme nous l'avons précédemment indiqué, le premier mode de réalisation nécessite de réaliser à nouveau l'ensemble du revêtement en cas de réutilisation du substrat. La conception "disque rapporté" permet toujours de revêtir les flasques externes après préparation (usinage pour enlever le revêtement dégradé puis sablage) mais la barrière thermique n'est pas à réaliser de nouveau. Les flasques intermédiaires, de fabrication plus onéreuse, et le flasque central n'ont pas à être changés.

## Revendications

1.  Disque multimatériaux (40, 50, 60, 800) pour freinage à haute énergie caractérisé en ce qu'il est constitué de différents flasques assemblés.

2.  Disque multimatériaux selon la revendication 1, composé, successivement, d'un flasque central (41, 51, 61, 801) de barrières thermiques (42, 52, 62, 802), disposés de part et d'autre dudit flasque central, et de flasques externes (43, 53, 63, 803) composés d'un substrat (44, 54, 64, 804) comportant un revêtement (45, 55, 65, 805) sur une de ses faces.

3.  Disque multimatériaux selon la revendication 2, dans lequel le flasque central est en alliage d'aluminium ou en composite à matrice d'aluminium et/ou les barrières thermiques sont en matériau céramique fritté sous forme massive en zircone ou matériau céramique thermiquement isolant et/ou les substrats sont en acier et/ou l'ensemble est constitué d'une sous-couche et/ou d'un matériau composite céramique-métal du type nickel-chrome/carbure de chrome.

4.  Disque multimatériaux selon l'une quelconque des revendications 2 et 3, dans lequel les barrières thermiques sont élaborées à partir de matériaux composites constitués d'un mélange de fibres d'alumine ou de céramique oxyde et de liant organique.

5.  Disque multimatériaux selon la revendication 2, dans lequel le flasque central (61) comporte des barrières thermiques (62A) réalisées sur ses faces par un procédé de dépôt.

6.  Disque multimatériaux selon la revendication 5, dans lequel les flasques externes (63) comportent des secondes barrières thermiques (62B) réalisées sur une de leurs faces par un procédé de dépôt.

7.  Disque multimatériaux selon l'une quelconque des revendications précédentes, associé à une garniture de frein (37) comportant des plots (31) en titanate d'aluminium ou en un autre matériau céramique.

8.  Disque multimatériaux selon la revendication 7, dans lequel les plots de la garniture de frein se composent principalement de l'ordre de 54% d'alumine, de l'ordre de 33% d'oxyde de titane, de l'ordre de 3% de silice et de l'ordre de 2,5% d'oxyde de magnésium.

# FIG.1

12

15

Dt

14

x

13    11

y

# FIG.2

x

21

25    24    23    22    23    24    25

# FIG.3

# FIG.4

# FIG.5

# FIG.6

# FIG.7

# FIG.8

# FIG.9

Office européen
des brevets

**RAPPORT DE RECHERCHE EUROPEENNE**

Numero de la demande

EP 95 40 0637

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X <br> Y | US-A-2 381 941 (WELLMAN ET AL.) <br><br> * page 5, colonne de droite, ligne 8 - ligne 51 * <br> * page 6, colonne de gauche, ligne 39 - ligne 61 * <br> * figures 5,6,10 * <br> --- | 1,2 <br> 3,7 | F16D65/12 |
| X | PATENT ABSTRACTS OF JAPAN <br> vol. 15, no. 57 (M-1080) 12 Février 1991 <br> & JP-A-02 286 926 (AKEBONO BRAKE) <br> * abrégé * <br> --- | 1-3 | |
| X | FR-A-2 071 907 (PORSCHE) <br> * le document en entier * <br> --- | 1 | |
| Y <br> A | GB-A-2 268 511 (FORD MOTOR COMPANY) <br><br> * page 3, ligne 20 - page 4, ligne 10; figure 3 * <br> --- | 3 <br> 2 | |
| Y | US-A-2 959 254 (RIGGS) <br> * le document en entier * <br> --- | 7 | **DOMAINES TECHNIQUES RECHERCHES (Int.Cl.6)** <br> F16D |
| A | US-A-5 224 572 (SMOLEN, JR. ET AL.) <br> * colonne 3, ligne 12 - colonne 4, ligne 37; figures * <br> --- | 3-5 | |
| A | DATABASE WPI <br> Week 9218, <br> Derwent Publications Ltd., London, GB; <br> AN 92-145264 <br> & JP-A-4 081 491 (HITACHI CHEMICAL) <br> * abrégé * <br> ----- | 7,8 | |

Le présent rapport a été établi pour toutes les revendications

| Lieu de la recherche | Date d'achèvement de la recherche | Examinateur |
|---|---|---|
| LA HAYE | 25 Juillet 1995 | Becker, R |